# EUROPÄISCHE PATENTSCHRIFT

(11) **EP 3 050 691 B1**
(45) Veröffentlichungstag und Bekanntmachung des Hinweises auf die Patenterteilung: **04.08.2021**
(21) Anmeldenummer: 15003380.1
(22) Anmeldetag: 26.11.2015
(51) Int. Cl.: B29C 45/14, B29C 44/12, G02B 6/36, H01R 13/00, H01R 13/58, H01R 43/24

(54) **VERFAHREN ZUR HERSTELLUNG EINER UMHÜLLUNG EINES STECKERTEILS**
METHOD FOR PRODUCING A CLADDING OF A CONNECTOR
PROCÉDÉ DE FABRICATION D'UNE ENVELOPPE D'UN ÉLÉMENT ENFICHABLE

(30) Priorität: 30.01.2015 DE 102015101362
(43) Veröffentlichungstag der Anmeldung: 03.08.2016
(73) Patentinhaber: NEUTRIK AG, 9494 Schaan (LI)
(72) Erfinder: Maikisch, Martin, 6822 Satteins (AT)
(74) Vertreter: Fechner, Thomas

(56) Entgegenhaltungen:
- DE-A1- 2 711 859
- DE-A1- 3 842 294
- DE-A1- 19 754 236
- US-A- 3 862 791
- L J Hyde ET AL: "The MuCell Injection Molding Process: A Strategic Cost Savings Technology for Electronic Connectors", , 19. September 2003 (2003-09-19), XP055272445, Gefunden im Internet: URL:http://citeseerx.ist.psu.edu/viewdoc/d ownload;jsessionid=D431215948FB76B2E9F7A0B C58EA2E70?doi=10.1.1.202.2075&rep=rep1&typ e=pdf [gefunden am 2016-05-12]
- LUEBKE G: "DUENNWANDIGE BAUTEILE VERWENDUNG CHEMISCHER TREIBMITTEL BEIM SPRITZGIESSEN", KUNSTSTOFFE, CARL HANSER VERLAG, MUNCHEN, DE, Bd. 92, Nr. 12, 1. Dezember 2002 (2002-12-01), Seiten 79-82, XP001121870, ISSN: 0023-5563

## Beschreibung

Die vorliegende Erfindung betrifft ein Verfahren gemäß des Oberbegriffs des Patentanspruchs 1.

Beim Stand der Technik ist es bekannt, mittels Spritzgussverfahren Umhüllungen der oben genannten Art herzustellen. Diese Umhüllungen können z. B. ein Kabel umhüllen, um eine Knickschutztülle für das Kabel auszubilden. Genauso ist es bekannt, auf Grundkörpern von Steckerteilen für elektrische und/oder optische Steckverbindungen Umhüllungen auf- oder anzuspritzen, um so eine gewisse Haptik oder ein gewisses Design oder eine gewünschte elektrische Isolation oder einen Schlag- oder Korrosionsschutz am Steckerteil auszubilden.

Aus dem Artikel "The MuCell® Injection Molding Process: A Strategie Cost Savings Technology for Electronic Connectors" ist es bekannt, elektronische Verbindungskomponenten im Spritzgussverfahren herzustellen und dabei einen mikrozellularen Schaum im eingespritzten Material zu erzeugen. Bei dem in dieser Schrift geschilderten Prozess wird auf superkritische Fluide aus Inertgasen zurückgegriffen. Die US 3,862,791 A beschreibt einen Anschlussstiftblock aus einem harten thermoplastischen Schaum, welcher durch Injektion von Gasen in das geschmolzene Plastikmaterial während des Prozesses des Mischens eines chemischen Treibmittels mit granularem Plastik entsteht. Die DE 197 54 236 A1 beschreibt ein elektrisches Kabel mit einem an seiner Umfangsfläche angeformten Formteil, wobei zur Bildung des Formteiles die Kabelumfangsfläche mit einem Kunststoffmaterial umspritzt, umgossen oder umschäumt wird. Die DE 27 11 859 A1 beschreibt ein Verfahren zum Herstellen eines Kontaktorgans, bei dem ein schäumbarer Werkstoff in einer die Herstellungsform nur teilweise ausfüllenden Menge in diese eingespritzt wird und der Werkstoff dann in der Herstellungsform ausgeschäumt wird. Die DE 38 42 294 A1 beschreibt einen Anschlussstecker für ein koaxiales Hochfrequenzkabel, bei dem der Raum zwischen Innenleiterkontakt und Kontakthülse durch eine im Wellenwiderstand an das Kabel angepasste Kunststofffüllung ausgefüllt wird, wobei das Ausfüllen durch ein Einspritzen und/oder Ausschäumen erfolgen kann. Der Artikel "Dünnwandige Bauteile; Verwendung chemischer Treibmittel beim Spritzgießen" beschreibt, wie mit einem chemischen Treibmittelsystem auf konventionellen Spritzgießmaschinen Bauteile mit Wanddicken von maximal 3mm ohne Einfallstellen hergestellt werden können.

Aufgabe der Erfindung ist es, ein gattungsgemäßes Verfahren dahingehend zu verbessern, dass die Umhüllung mittels Spritzguss schneller und damit günstiger herstellbar ist.

Die Erfindung schlägt hierfür ein Verfahren gemäß Patentanspruch 1 vor.

Durch die Zugabe des chemischen Treibmittels zum thermoplastischen Material beim Spritzguss werden durch Ausgasen des Treibmittels Gaseinschlüsse in der Umhüllung ausgebildet. Hierdurch kühlt die Umhüllung schneller aus, sodass der gesamte Spritzgussvorgang bis zur Entnahme der Umhüllung aus der Spritzgussform gegenüber dem Stand der Technik verkürzt werden kann, womit die Umhüllung schneller und damit kostengünstiger herstellbar ist. Ein weiterer aus wirtschaftlicher Sicht positiver Effekt der Erfindung liegt darin, dass pro Umhüllung gegenüber einer konventionellen Herstellungsweise weniger thermoplastisches Material verbraucht wird. Die Umhüllung wird hierdurch einerseits leichter, andererseits billiger herstellbar.

Beim erfindungsgemäßen Verfahren ist es durch die Verwendung des Treibmittels möglich, mit geringeren Einspritzdrücken und auch geringeren Einspritztemperaturen beim Spritzgießen zu arbeiten. Es wird ein sogenannter Niederdruckspritzguss möglich. Beim erfindungsgemäßen Verfahren ist vorgesehen, dass der Einspritzdruck zwischen 5 bar und 40 bar liegt. Die Einspritztemperatur liegt bei erfindungsgemäßen Verfahren zwischen 100° C und 240° C. Beide Wertebereiche liegen deutlich unter den beim Stand der Technik notwendigen Einspritzdrücken und Einspritztemperaturen. Der Vollständigkeit halber wird darauf hingewiesen, dass abgesehen von den hier konkret genannten Maßnahmen der Spritzgussvorgang zur Herstellung der Umhüllung ansonsten wie beim Stand der Technik durchgeführt werden kann. Da solche Spritzgussverfahren in verschiedensten Varianten beim Stand der Technik an sich bekannt sind, wird hier darauf verzichtet, diese noch einmal im Detail zu schildern.

Die geringeren Einspritzdrücke und Einspritztemperaturen haben wiederum einen wirtschaftlichen Vorteil, da die verwendeten Spritzgussmaschinen kleiner gebaut sein können und auch weniger Energie verbrauchten. Neben den rein wirtschaftlichen Vorteilen bringt die Erfindung aber auch Qualitätsvorteile. So lässt sich durch die Zugabe von Treibmittel und die dadurch gebildeten Gaseinschlüsse in der Umhüllung die Elastizität des Endproduktes, also der Umhüllung sehr gezielt im gewünschten Bereich einstellen. Auch die Wechselbiegefestigkeit des hergestellten Endprodukts wird gegenüber dem Stand der Technik verbessert. Erfindungsgemäß hergestellte Umhüllungen sind somit auch bei starker mechanischer Beanspruchung länger haltbar und gehen weniger schnell kaputt.

Bei dem erfindungsgemäß eingesetzten thermoplastischen Material bzw. in anderen Worten Thermoplast handelt es sich grundsätzlich um einen Kunststoff, der sich in einem bestimmten Temperaturbereich verformen lässt, wobei dieser Vorgang reversibel ist, sodass sich das thermoplastische Material beim Spritzgießen von einer festen in eine flüssige Form und anschließend beim Auskühlen wieder in einen festen Aggregatzustand bringen lässt. Dies ist an sich bekannt, genauso wie zahlreiche für den Spritzguss geeignete Thermoplaste bzw. thermoplastische Materialien. Grundsätzlich können im Zuge der Erfindung unterschiedlichste thermoplastische Materialien verwendet werden. Besonders bevorzugt kommen im Zuge der Erfindung thermoplastische Elastomere oder PVC zum Einsatz. Als Beispiele für geeignete thermoplastische Elastomere können z. B. thermoplastische Elastomere auf Olefinbasis, vernetzte thermoplastische Elastomere auf Olefinbasis, thermoplastische Elastomere auf Urethanbasis, thermoplastische Polyesterelastomere, thermoplastische Copolyester oder Styrol-Blockcopolymere sowie thermoplastische Copolyamide genannt werden.

Bei der Erfindung ist vorgesehen, dass ein ausgasendes Treibmittel mit in die Spritzgussform eingespritzt wird und durch Ausgasen des Treibmittels die Gaseinschlüsse in der Umhüllung ausgebildet werden. Es handelt sich dabei um ein chemisches Treibmittel, also eine chemische Substanz bei deren Zersetzung Gas abgespalten bzw. freigesetzt wird. Bevorzugt wird das Treibmittel und insbesondere das chemische Treibmittel zum Herbeiführen des Ausgasungsvorgangs thermisch aktiviert. Grundsätzlich ist aber auch eine chemische Aktivierung des Treibmittels möglich, z. B. indem man zumindest zwei Komponenten so zusammen bringt, dass sie durch chemische Wechselwirkungen den Ausgasungsvorgang entfachen. Besonders bevorzugte Varianten sehen vor, dass das Treibmittel zum Herbeiführen des Ausgasungsvorgangs, vorzugsweise in der Spritzgussform, thermisch aktiviert wird. Das thermoplastische Material und/oder das Treibmittel können vor Beginn des Spritzgussvorgangs z. B. in Granulatform vorliegen. Als Treibmittel können auch Flüssigkeiten mit entsprechend niedriger Verdampfungstemperatur eingesetzt werden. Auch diese können thermisch aktiviert, also zum Verdampfen und damit zur Gasbildung angeregt werden. Alternative Ausgestaltungsformen der Erfindung können auch vorsehen, dass das thermoplastische Material und das Treibmittel nicht vorab gemischt, sondern gleichzeitig oder nacheinander in die Spritzgussform eingespritzt werden. Der Vollständigkeit halber wird darauf hingewiesen, dass es sich sowohl beim thermoplastischen Material als auch beim Treibmittel jeweils um einen Stoff bzw. ein Material aber auch jeweils um ein Gemisch mehrerer Materialien oder Treibmittel oder Gase handeln kann.

Geeignete Treibmittel sind beim Stand der Technik an sich bekannt. Beispiele für geeignete granulatförmige Treibmittel sind auf dem Markt unter der Handelsbezeichnung Hydrocerol erhältlich. Als flüssiges Treibmittel können z. B. Benzin oder Wasser eingesetzt werden. Die Treibmittel können sowohl aus organischen als auch aus anorganischen Verbindungen bestehen.

Günstigerweise werden die Gaseinschlüsse in Form von in sich geschlossenen Gasblasen oder Poren ausgebildet. Man könnte also auch von einer geschlossenen Porosität sprechen. Es ist aber auch die Ausbildung einer offenen Porosität also untereinander verbundener Gasblasen bzw. Poren denkbar. Bevorzugt wird die beigemengte Menge an Treibmittel und/oder Gas bzw. Treibgas so eingestellt, dass die durch die Gaseinschlüsse verursachte Porosität am Endprodukt, also der Umhüllung in einem Bereich zwischen 5 % und 40 % liegt. In anderen Worten haben die Gaseinschlüsse dann also einen Volumenanteil von bevorzugt 5 bis 40 % am Endprodukt bzw. an der Umhüllung. Dieser Volumenanteil der Gaseinschlüsse bzw. diese Porosität kann aber auch Werte bis zu 60% oder sogar bis 80% erreichen. Die Gaseinschlüsse sind in der fertigen Umhüllung in einer Matrix bestehend aus dem thermoplastischen Material angeordnet. Die Gaseinschlüsse bilden also in anderer Wortwahl eine Porosität in dem thermoplastischen Material der fertigen Umhüllung. Man könnte auch von einem Aufschäumen des thermoplastischen Materials sprechen.

Bevorzugte Ausgestaltungsformen der Erfindung sehen vor, dass das Treibmittel, bezogen auf den Zustand vor dem Ausgasen, mit einem Anteil von 0,5 % bis 5 %, vorzugsweise von 1,5 % bis 2,5 %, an der Gesamtmasse des thermoplastischen Materials und des Treibmittels mit in die Spritzgussform eingespritzt wird.

Die Umhüllung kann bei dem erfindungsgemäßen Verfahren an einen Grundkörper des Steckerteils und/oder an das Kabel angespritzt werden. Bei dieser Variante kann man auch von einem Umspritzen des Grundkörpers und/oder des Kabels sprechen. Hierzu wird, wie an sich bekannt, der Grundkörper und/oder das Kabel vor dem Einspritzvorgang in die Spritzgussform eingebracht. Bei geschlossener Spritzgussform wird dann das eingespritzte thermoplastische Material direkt an den Grundkörper und/oder das Kabel angespritzt. Eine Alternative des erfindungsgemäßen Verfahrens kann auch darin bestehen, die Umhüllung zunächst in der Spritzgussform mittels Spritzguss herzustellen und anschließend am oder auf dem Grundkörper des Steckerteils und/oder dem Kabel zu befestigen.

Bei erfindungsgemäß hergestellten Umhüllungen liegt die durch die Gaseinschlüsse in der Umhüllung verursachte Porosität, wie oben bereits angezeigt, günstigerweise in einem Bereich zwischen 5 % und 40 %. Bevorzugt sind die Gaseinschlüsse als eine Vielzahl von über die Umhüllung verteilten Gasbläschen bzw. Poren ausgebildet. Günstigerweise sind die Gaseinschlüsse bzw. Poren im Wesentlichen gleichmäßig über die Umhüllung verteilt. Die Gaseinschlüsse weisen günstigerweise einen Durchmesser zwischen 10µm und 1,5mm auf. Als Durchmesser wird jeweils der größte Durchmesser der jeweiligen Pore bzw. des jeweiligen Gasbläschens bezeichnet. Die Umhüllung kann z. B. eine Knickschutztülle für das Kabel sein. Es handelt sich dabei um eine Umhüllung, welche in dem Bereich am Kabel und gegebenenfalls auch am Steckerteil angebracht ist, wo das Kabel in das Steckerteil hineingeführt ist. Die Knickschutztülle stützt dabei das Kabel, dort wo es aus dem Steckerteil herausgeführt wird, sodass in diesem Bereich ein Abknicken oder Abreißen des Kabels vom Steckerteil möglichst weitgehend verhindert wird. Eine erfindungsgemäße Umhüllung kann aber auch ein sogenanntes Overmold für einen Grundkörper des Steckerteils sein. Es handelt sich dabei um einen Überzug dieses Grundkörpers. Bei dem Grundkörper kann es sich z. B. um ein aus Metall oder Kunststoff hergestelltes Gehäuse des Steckerteils handeln. Natürlich kann die Umhüllung aber auch eine Kombination aus Knickschutztülle und Overmold sein. Sie kann also auch einen Bereich aufweisen, welcher eine Knickschutztülle ist und einen anderen Bereich aufweisen, welcher ein Overmold ist, wobei diese beiden Bereich einstückig zusammen hängen können.

Der Vollständigkeit halber wird darauf hingewiesen, dass die fertig hergestellte Umhüllung das Steckerteil bzw. dessen Grundkörper und/oder auch das Kabel vollständig umfangsgeschlossen umgeben kann aber nicht muss. Die Umhüllung kann auch nur auf Teilbereichen und insbesondere nicht umfangsgeschlossen auf dem Steckerteil, dessen Grundkörper und/oder dem Kabel ausgebildet sein bzw. werden.

Weitere Merkmale und Einzelheiten bevorzugter Ausgestaltungsformen der Erfindung werden anhand der nachfolgenden Figurenbeschreibung erläutert. Es zeigen:
- Fig. 1: eine erfindungsgemäß hergestellte Umhüllung in Form einer Knickschutztülle in einer Seitenansicht;
- Fig. 2: einen schematisierten Längsschnitt durch Fig. 1 und damit durch die Knickschutztülle;
- Fig. 3: eine schematisierte Darstellung zum erfindungsgemäßen Herstellungsverfahren des ersten Ausführungsbeispiels mittels Spritzguss;
- Fig. 4: den Bereich A aus Fig. 3;
- Fig. 5: ein zweites Ausführungsbeispiel einer erfindungsgemäß hergestellten Umhüllung, welche sowohl ein Overmold für einen Grundkörper des Steckerteils als auch eine Knickschutztülle ausbildet;
- Fig. 6: einen schematisierten Längsschnitt durch Fig. 5 und
- Fig. 7: wiederum eine schematisierte Darstellung zum Herstellungsverfahren mittels Spritzguss zu der Ausführungsvariante gemäß der Fig. 5 und 6.

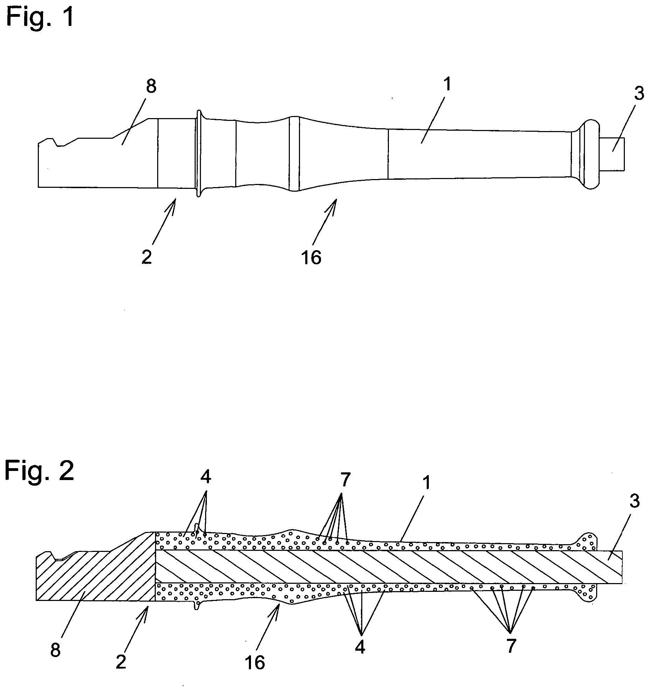

Fig. 1 zeigt in einer Seitenansicht eine Umhüllung 1 in Form einer Knickschutztülle 16 für das Kabel 3. Sowohl das Kabel 3 als auch der Grundkörper 8 des Steckerteils 2 sind nur stark schematisiert dargestellt. Dies gilt vor allem auch für den Längsschnitt, welcher in Fig. 2 zu sehen ist. Eine solche Knickschutztülle 16 mit dem daran angesetzten Steckerteil 2 kann z. B. bei einem Stromversorgungskabel 3, welches in eine Bohrmaschine, eine Schleifmaschine oder ein anderes Arbeitsgerät hineinführt, eingesetzt werden, um das Kabel 3 davor zu schützen, in dem Bereich, wo es aus dem Gehäuse der Arbeitsmaschine herauskommt, abgerissen oder abgeknickt zu werden. Im gezeigten Ausführungsbeispiel ist das Steckerteil 2 für eine loslösbare Steckverbindung mit einer in dem Arbeitsgerät angeordneten, hier nicht gezeigten Buchse vorgesehen. Dies ist natürlich aber nur ein Beispiel. Die Knickschutztülle 16 könnte genauso gut auch fix am Gehäuse der Arbeitsmaschine angeordnet werden.

In dem Längsschnitt gemäß Fig. 2 sind die Gaseinschlüsse 7, welche sich fein verteilt über die gesamte Umhüllung 1 bzw. Knickschutztülle 16 erstrecken, schematisiert dargestellt. Die Gaseinschlüsse 7 sind von einer Matrix aus dem thermoplastischem Material 4 umgeben.

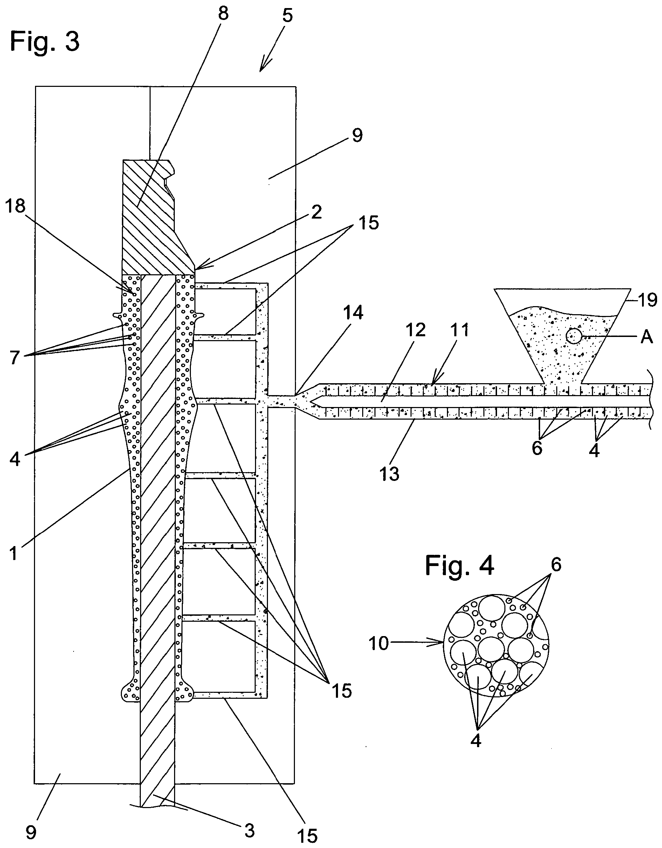

Fig. 3 zeigt stark schematisiert die Spritzgussform 5 und das Einspritzaggregat 11 einer Spritzgussmaschine, mit welcher das erfindungsgemäße Verfahren zur Herstellung der Umhüllung 1 des Steckerteils 2 durchgeführt werden kann. Auf eine detaillierte Darstellung einer entsprechenden Spritzgussmaschine wird verzichtet, da diese beim Stand der Technik an sich bekannt ist. Die Spritzgussform 5 weist, wie an sich bekannt, zwei Formhälften 9 auf. Diese umschließen in ihrer hier dargestellten Schließstellung gemeinsam einen Formhohlraum 18, welcher die Außenkontur und - form des Endproduktes also hier der Umhüllung 1 vorgibt. Vor dem eigentlichen Spritzgussvorgang werden der Grundkörper 8 und das darin befestigte Kabel 3 bei geöffneter Spritzgussform 5 in den Formhohlraum 18 eingelegt. Anschließend werden die Formhälften 9 geschlossen und mit dem für den Spritzgussvorgang benötigten Anpressdruck zusammengepresst. Das Ausgangsmaterial, bestehend aus einer Mischung aus thermoplastischem Material 4 und Treibmittel 6, wird in den Einfülltrichter 19 des Einspritzaggregats 11 eingefüllt. In Fig. 4 ist der Bereich A aus Fig. 3 schematisiert und vergrößert dargestellt. Zu sehen ist, dass im Ausgangsmaterial dieses Ausführungsbeispiels sowohl das thermoplastische Material 4 als auch das Treibmittel 6 jeweils als Granulat vorliegen. Im gezeigten Ausführungsbeispiel weist das Einspritzaggregat 11, wie an sich bekannt, eine Schnecke 12 auf, welche im Einspritzrohr 13 um ihre Längsrichtung drehbar und in Längsrichtung verschiebbar gelagert ist. Mit der Spitze 14 des Einspritzaggregats 11 mündet dieses in den, in einer der Formhälften 9 vorgesehenen Einspritzkanal 15.

Die Vorbehandlung des thermoplastischen Materials 4 im Einspritzaggregat 11, wie auch der Einspritzvorgang selbst, erfolgen grundsätzlich erst einmal wie beim Stand der Technik an sich bekannt. Es kann also vorgesehen sein, dass durch Rotieren der Schnecke 12 die Materialmischung bestehend aus thermoplastischem Material 4 und Treibmittel 6 aus dem Vorratsbehälter 19 in das Einspritzrohr 13 gefördert und dort in Richtung der Spitze 14 transportiert wird. Bei diesem Transport hin zur Spitze 14 wird das thermoplastische Material 4, gegebenenfalls unter Mithilfe von hier nicht dargestellten, aber an sich bekannten Heizelementen am oder im Einspritzrohr 13, verflüssigt. Für den Einspritzvorgang sammelt sich dann eine entsprechende Menge thermoplastisches geschmolzenes Material 4 mit entsprechendem Anteil an Treibmittel 6 in der Spitze des Einspritzrohrs 13. Zum Einspritzen selbst wird die Schnecke 12 in ihrer Längsrichtung in Richtung hin zur Spitze 14 verschoben, sodass das in der Spitze 14 angesammelte Material über die Anspritzkanäle 15 in den Formhohlraum 18 eingespritzt wird und diesen füllt. Wann nun das unter das thermoplastische Material 4 untergemischte Treibmittel 6 beginnt auszugasen, kann über ein entsprechendes Temperaturprofil gesteuert werden, wenn es sich um ein thermisch aktivierbares Treibmittel handelt. So ist es z. B. denkbar, dass bereits im Einspritzrohr 13 der Ausgasungsvorgang beginnt wenn dort bereits entsprechende Temperaturen erreicht werden. Es ist aber genauso gut denkbar, dass das Treibmittel 6 erst in den Formhohlraum 18 gespritzt wird und dann durch dort angeordnete, hier nicht explizit gezeigte, Heizeinrichtungen auf eine Temperatur gebracht wird, die zur thermischen Aktivierung und damit zur Ausgasung des Treibmittels 6 führt. Genauso gut könnte man auch die Anspritzkanäle 15 heizen, um eine entsprechende thermische Aktivierung herbeizuführen.

Abweichend von diesem Ausführungsbeispiel können bei erfindungsgemäßen Verfahren natürlich auch andere und auch mehrere Einspritzaggregate 11 dazu eingesetzt werden, das thermoplastische Material 4 und das Treibmittel 6 in den Formhohlraum einzuspritzen. Auch ein Einspritzen von Treibmittel 6 erst im Bereich der Spitze 14 zu dem dort bereits aufgeschmolzenen thermoplastischen Material 4 wäre denkbar.

Anstelle der hier realisierten, an sich bekannten Schnecke 12 könnte im Einspritzrohr 13 auch ein einfacher Kolben längsverschiebbar für den Einspritzvorgang vorgesehen sein. Alle beim Stand der Technik bekannten, an sich geeigneten Einspritzverfahren und Einspritzmaschinen können in entsprechend adaptierter Art und Weise für das Verfahren eingesetzt werden. Die in Fig. 3 gezeigte Variante ist lediglich ein Beispiel.

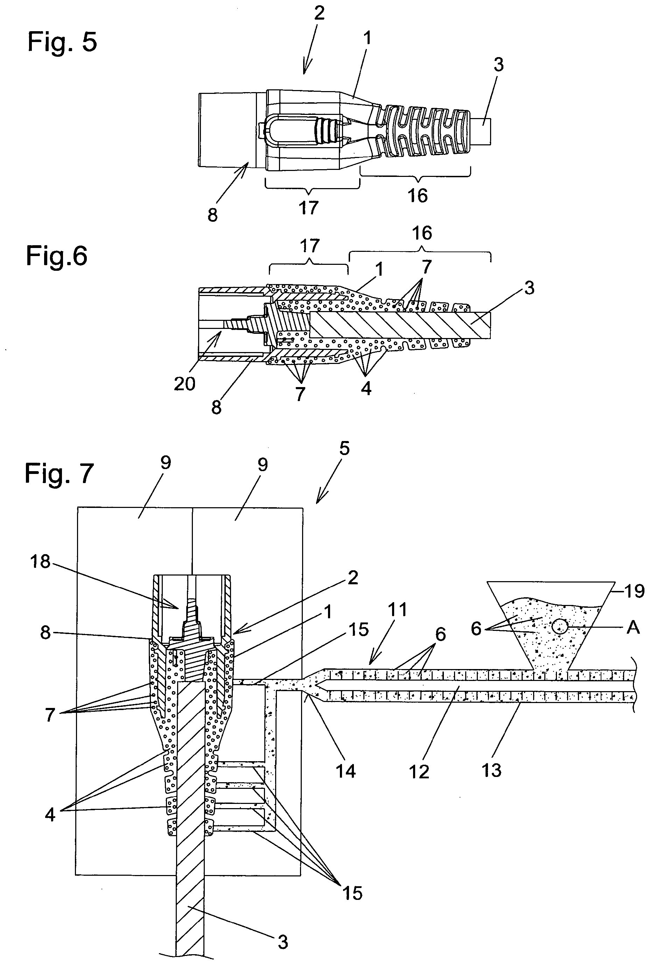

Die Fig. 5 bis 7 dienen der Veranschaulichung eines zweiten Beispiels einer Umhüllung 1 und deren Herstellung mittels Spritzguss. Bei dem in den Fig. 5 in einer Draufsicht und in Fig. 6 in einem Längsschnitt dargestellten Steckerteil 2 handelt es sich um einen sogenannten Kabelstecker, bei dem ein Kabel 3 in einen Grundkörper 8 bzw. ein Gehäuse des Steckerteils 2 hineingeführt ist. Solche Steckerteile 2 können sowohl zur Signal- als auch zur Energieübertragung eingesetzt werden. Sie können optische und/oder elektrische Steckverbindungen durch Zusammenstecken mit zumindest einem entsprechenden, hier nicht dargestellten, weiteren Steckerteil ermöglichen. Dieses zweite bzw. weitere Steckerteil kann wiederum ein Kabelstecker oder auch eine Gerätebuchse sein. Die Steckkontakte 20 im Grundkörper 8, welche der elektrischen und/oder optischen Signalübertragung und/oder Energieübertragung dienen, sind hier nur stark schematisiert dargestellt und können, wie beim Stand der Technik bekannt, in verschiedensten Ausgestaltungsformen ausgeführt sein.

In diesem zweiten Ausführungsbeispiel umfasst die Umhüllung 1 sowohl einen Bereich, welcher eine Knickschutztülle 16 bildet, als auch einen Bereich, welcher einen Overmold 17 über den Grundkörper 8 bzw. das Gehäuse des Steckerteils 2 bildet. Diese beiden Bereiche, also das Overmold 17 und die Knickschutztülle 16 werden in diesem Ausführungsbeispiel gemeinsam spritzgegossen und sind damit einstückig ausgeführt. Dies ist auch gut im Längsschnitt gemäß Fig. 16 zu sehen. Schematisiert dargestellt sind dort wieder die Gaseinschlüsse 7, welche in dem die Matrix bildenden thermoplastischen Material 4 über die gesamte Umhüllung 1 fein verteilt angeordnet sind. Fig. 7 zeigt wiederum zur Veranschaulichung des erfindungsgemäßen Verfahrens analog zu Fig. 3 schematisierte Bestandteile einer Spritzgussmaschine. Zu deren Erläuterung wie auch zur Erläuterung des Spritzgussvorgangs und der hierzu möglichen Alternativen wird auf die Schilderung zu Fig. 3 verwiesen. All das dort Gesagte kann hier analog angewendet werden, um die Umhüllung 1 mittels Spritzguss herzustellen. Auch der Ausschnitt A aus Fig. 7 entspricht Fig. 4, also der dort dargestellten Mischung 10 aus dem granulatförmigen thermoplastischen Material 4 und dem dort untergemischten granulatförmigen Treibmittel 6.

### Legende

zu den Hinweisziffern:
- 1: Umhüllung
- 2: Steckerteil
- 3: Kabel
- 4: thermoplastisches Material
- 5: Spritzgussform
- 6: Treibmittel
- 7: Gaseinschluss
- 8: Grundkörper
- 9: Formhälfte
- 10: Mischung
- 11: Einspritzaggregat
- 12: Schnecke
- 13: Einspritzrohr
- 14: Spritze
- 15: Anspritzkanal
- 16: Knickschutztülle
- 17: Overmold
- 18: Formhohlraum
- 19: Vorratsbehälter
- 20: Steckkontakt

## Patentansprüche

1. Verfahren zur Herstellung einer Umhüllung (1) eines Steckerteils (2) für eine elektrische und/oder optische Steckverbindung und/oder eines Kabels (3), wobei die Umhüllung (1) mittels Spritzguss aus einem thermoplastischen Material (4) in einer Spritzgussform (5) hergestellt wird, und zusätzlich zu dem thermoplastischen Material (4) zumindest ein ausgasendes Treibmittel (6) mit in die Spritzgussform (5) eingespritzt wird und Gaseinschlüsse (7) in der Umhüllung (1) ausgebildet werden, **dadurch gekennzeichnet, dass** der Einspritzdruck in einem Bereich zwischen 5 bar und 40 bar und die Einspritztemperatur in einem Bereich zwischen 180°C und 240°C liegen und dass das ausgasende Treibmittel (6) ein chemisches Treibmittel ist.

2. Verfahren nach Anspruch 1, **dadurch gekennzeichnet, dass** das chemische Treibmittel (6) zum Herbeiführen des Ausgasungsvorgangs, vorzugsweise in der Spritzgussform (5), thermisch aktiviert wird.

3. Verfahren nach Anspruch 1 oder 2, **dadurch gekennzeichnet, dass** das Treibmittel (6) dem thermoplastischen Material (4) vor dem Einspritzen beigemengt wird und die so hergestellte Mischung (10) aus dem thermoplastischem Material (4) und dem chemischen Treibmittel (6) in die Spritzgussform (5) eingespritzt wird.

4. Verfahren nach einem der Ansprüche 1 bis 3, **dadurch gekennzeichnet, dass** die Umhüllung (1) an einen Grundkörper (8) des Steckerteils (2) und/oder an das Kabel (3) angespritzt wird, oder dass die Umhüllung (1) zunächst in der Spritzgussform (5) mittels Spritzguss hergestellt wird und anschließend am oder auf dem Grundkörper (8) des Steckerteils (2) und/oder dem Kabel (3) befestigt wird.

5. Verfahren nach einem der Ansprüche 1 bis 4, **dadurch gekennzeichnet, dass** das chemische Treibmittel (6), bezogen auf den Zustand vor dem Ausgasen, mit einem Anteil von 0,5 % bis 5 %, vorzugsweise von 1,5 % bis 2,5 %, an der Gesamtmasse des thermoplastischen Materials (4) und des chemischen Treibmittels (6) mit in die Spritzgussform (5) eingespritzt wird.

6. Verfahren nach einem der Ansprüche 1 bis 5, **dadurch gekennzeichnet, dass** durch die Gaseinschlüsse (7) eine Porosität in der Umhüllung (1) in einem Bereich zwischen 5% und 40% verursacht wird.

7. Verfahren nach einem der Ansprüche 1 bis 6, **dadurch gekennzeichnet, dass** die Gaseinschlüsse (7) als eine Vielzahl von über die Umhüllung (1) verteilten Gasbläschen und/oder mit einem Durchmesser zwischen 10µm und 1,5mm ausgebildet werden.

8. Verfahren nach einem der Ansprüche 1 bis 7, **dadurch gekennzeichnet, dass** als Umhüllung (1) eine Knickschutztülle (16) für das Kabel (3) und/oder ein Overmold (17) für einen Grundkörper (8) des Steckerteils (2) ausgebildet wird.

9. Verfahren nach einem der Ansprüche 1 bis 8, **dadurch gekennzeichnet, dass** das thermoplastische Material (4) ein thermoplastisches Elastomer auf Urethanbasis ist.

## Claims

1. A method for producing a sheath (1) of a plug part (2) for an electrical and/or optical plug-in connection and/or of a cable (3), wherein the sheath (1) is produced by means of injection moulding from a thermoplastic material (4) in an injection mould (5), and in addition to the thermoplastic material (4) at least one outgassing blowing agent (6) is co-injected into the injection mould (5) and gas inclusions (7) are formed in the sheath (1), **characterised in that** the injection pressure is in a range between 5 bar and 40 bar and the injection temperature is in a range between 180°C and 240°C, and **in that** the outgassing blowing agent (6) is a chemical blowing agent.

2. A method according to claim 1, **characterised in that** the chemical blowing agent (6) is thermally activated, preferably in the injection mould (5), to bring about the outgassing operation.

3. A method according to claim 1 or 2, **characterised in that** the blowing agent (6) is admixed to the thermoplastic material (4) prior to injection and the mixture (10) of the thermoplastic material (4) and the chemical blowing agent (6) thus produced is injected into the injection mould (5).

4. A method according to one of claims 1 to 3, **characterised in that** the sheath (1) is injected onto a base body (8) of the plug part (2) and/or onto the cable (3), or **in that** the sheath (1) is initially produced in the injection mould (5) by means of injection moulding and then is fastened to or on the base body (8) of the plug part (2) and/or the cable (3).

5. A method according to one of claims 1 to 4, **characterised in that** the chemical blowing agent (6), relative to the state prior to the outgassing, is co-injected into the injection mould (5) in a proportion of 0.5% to 5%, preferably of 1.5% to 2.5%, of the overall mass of the thermoplastic material (4) and of the chemical blowing agent (6).

6. A method according to one of claims 1 to 5, **characterised in that** a porosity in the sheath (1) in a range of between 5% and 40% is caused by the gas inclusions (7).

7. A method according to one of claims 1 to 6, **characterised in that** the gas inclusions (7) are formed as a multiplicity of gas bubbles distributed over the sheath (1) and/or with a diameter of between 10 µm and 1.5 mm.

8. A method according to one of claims 1 to 7, **characterised in that** an anti-kink sleeve (16) for the cable (3) and/or an overmould (17) for a base body (8) of the plug part (2) is/are formed as the sheath (1).

9. A method according to one of claims 1 to 8, **characterised in that** the thermoplastic material (4) is a urethane-based thermoplastic elastomer.

## Revendications

1. Procédé de fabrication d'une gaine (1) d'une fiche de raccordement (2) pour un raccordement par enfichage électrique et/ou optique et/ou d'un câble (3), la gaine (1) étant fabriquée par moulage par injection à partir d'un matériau thermoplastique (4) dans un moule de moulage par injection (5) et, en plus du matériau thermoplastique (4), au moins un agent gonflant dégageant du gaz (6) est également injecté dans le moule de moulage par injection (5) et des inclusions de gaz (7) sont formées dans la gaine (1), **caractérisé en ce que** la pression d'injection se situe dans une plage comprise entre 5 bars et 40 bars, et la température d'injection se situe dans une plage comprise entre 180°C et 240 °C, et **en ce que** l'agent gonflant dégageant du gaz (6) est un agent gonflant chimique.

2. Procédé selon la revendication 1, **caractérisé en ce que** l'agent gonflant chimique (6) est activé thermiquement, de préférence dans le moule de moulage par injection (5), pour provoquer le processus de dégagement de gaz.

3. Procédé selon la revendication 1 ou 2, **caractérisé en ce que** l'agent gonflant (6) est ajouté au matériau thermoplastique (4) avant l'injection, et le mélange ainsi formé (10) à base du matériau thermoplastique (4) et de l'agent gonflant chimique (6) est injecté dans le moule de moulage par injection (5).

4. Procédé selon l'une des revendications 1 à 3, **caractérisé en ce que** la gaine (1) est injectée sur un corps de base (8) la fiche de raccordement (2) et/ou sur le câble (3), ou **en ce que** la gaine (1) est d'abord produite dans le moule de moulage par injection (5) par moulage par injection puis elle est fixée sur ou au corps de base (8) de la fiche de raccordement (2) et/ou au câble (3).

5. Procédé selon l'une des revendications 1 à 4, **caractérisé en ce que** l'agent gonflant chimique (6), rapporté à l'état avant le dégagement de gaz, est co-injecté dans le moule de moulage par injection (5) dans une proportion allant de 0,5 % à 5 %, de préférence de 1,5 % à 2,5 %, de la masse totale du matériau thermoplastique (4) et de l'agent gonflant chimique (6).

6. Procédé selon l'une des revendications 1 à 5, **caractérisé en ce que** les inclusions de gaz (7) provoquent une porosité de la gaine (1) comprise entre 5 % et 40 %.

7. Procédé selon l'une des revendications 1 à 6, **caractérisé en ce que** les inclusions de gaz (7) sont formées comme une pluralité de bulles de gaz réparties dans la gaine (1) et/ou ayant un diamètre compris entre 10 µm et 1,5 mm.

8. Procédé selon l'une des revendications 1 à 7, **caractérisé en ce qu'**un manchon anti-flexion (16) pour le câble (3) et/ou un surmoulage (17) pour un corps de base (8) de la fiche de raccordement (2) sont formés en guise de gaine (1).

9. Procédé selon l'une des revendications 1 à 8, **caractérisé en ce que** le matériau thermoplastique (4) est un élastomère thermoplastique à base d'uréthane.
